# EUROPÄISCHE PATENTSCHRIFT

(11) **EP 4 431 875 B1**
(45) Veröffentlichungstag und Bekanntmachung des Hinweises auf die Patenterteilung: **09.09.2026**
(21) Anmeldenummer: 24160915.5
(22) Anmeldetag: 01.03.2024
(51) Int. Cl.: G01C 21/34, B60W 30/06, B62D 15/02, B60W 60/00, G05D 1/43, G05D 1/644

(54) **VERFAHREN ZUM BESTIMMEN EINER FAHRBAREN TRAJEKTORIE INNERHALB EINES BEFAHRBAREN SUCHRAUMES, STEUERVORRICHTUNG UND FAHRZEUG**
METHOD FOR DETERMINING A DRIVABLE TRAJECTORY WITHIN A DRIVABLE SEARCH SPACE, CONTROL DEVICE AND VEHICLE
PROCÉDÉ DE DÉTERMINATION D'UNE TRAJECTOIRE MOBILE DANS UN ESPACE DE RECHERCHE PRATICABLE, DISPOSITIF DE COMMANDE ET VÉHICULE

(30) Priorität: 14.03.2023 DE 102023202295
(43) Veröffentlichungstag der Anmeldung: 18.09.2024
(73) Patentinhaber: VOLKSWAGEN AG, 38440 Wolfsburg (DE)
(72) Erfinder: Iken, Timo, 29378 Wittingen (DE); Wappler, Stefan, 38387 Söllingen (DE); Kube, Roland, 38179 Schwülper (DE); Koch, Niklas, 38479 Tappenbeck (DE)

(56) Entgegenhaltungen:
- US-A1- 2019 310 092

## Beschreibung

Die Erfindung betrifft ein Verfahren zum Bestimmen einer fahrbaren Trajektorie innerhalb eines befahrbaren Suchraumes für ein Fahrzeug, insbesondere ein terrestrisches Fahrzeug. Ferner betrifft die Erfindung ein korrespondierendes Computerprogrammprodukt zum Durchführen eines entsprechenden Verfahrens. Weiterhin betrifft die Erfindung eine korrespondierende Steuervorrichtung zum Durchführen eines entsprechenden Verfahrens. Des Weiteren betrifft die Erfindung ein korrespondierendes Fahrzeug mit einer entsprechenden Steuervorrichtung.

Um in komplexen Szenarien, bspw. beim Navigieren in einem Parkhaus, eine fahrbare Trajektorie zu ermitteln, werden vermehrt automatische Suchverfahren angewandt. Diese setzen verschiedene Koordinatenpunkte, mit unterschiedlichen sich abzweigenden Fahrbahnabschnitten, aneinander und versuchen, über ausgewählte Fahrbahnabschnitte iterativ von einem Startpunkt zu einem Endpunkt zu gelangen. Dabei werden für jeden Fahrbahnabschnitt Kosten errechnet, z. B. in Abhängigkeit von einer Krümmung, einer Krümmungsänderung, einem Abstand zu Hindernissen usw. An jedem Koordinatenpunkt wird eine Grundmenge an Fahrbahnabschnitten mit verschiedenen Krümmungen abgebildet. Dabei entsteht eine Baumstruktur. Die Struktur wird umso größer, je größer der Bereich ist, der zur Planung zur Verfügung steht (sog. Suchraum). Je größer die Struktur, desto größer die benötigten Rechenressourcen. Die Ressourcen lassen sich begrenzen, indem eine kleine Menge (bspw. 3 Klothoiden) an Fahrbahnabschnitten an jedem Koordinatenpunkt genutzt wird (z. B. nur Geradeaus, Volleinschlag links und Volleinschlag rechts). Dies schränkt jedoch die Genauigkeit der Lösung stark ein.

Die US 2019 / 310 092 A1 offenbart ein Verfahren, ein System und ein Gerät zur dynamischen Pfaderzeugung.

Aufgabe der Erfindung ist daher, wenigstens einen der voranstehend beschriebenen Nachteile zumindest teilweise zu überwinden. Insbesondere ist es Aufgabe der Erfindung, ein verbessertes Verfahren zum Bestimmen einer fahrbaren Trajektorie innerhalb eines befahrbaren Suchraumes bereitzustellen. Vorzugsweise ist es Aufgabe der Erfindung, ein verbessertes Verfahren zum Bestimmen einer fahrbaren Trajektorie innerhalb eines befahrbaren Suchraumes bereitzustellen, welches schnell durchführbar ist, welches die benötigten Rechenressourcen auf eine vorteilhafte Weise reduziert, und welches eine sichere Trajektorienplanung, insbesondere während eines mobilen Betriebs eines Fahrzeuges, ermöglicht. Ferner ist es Aufgabe der Erfindung, ein korrespondierendes Computerprogrammprodukt zum Durchführen eines entsprechenden Verfahrens bereitzustellen. Weiterhin ist es Aufgabe der Erfindung, eine korrespondierende Steuervorrichtung zum Durchführen eines entsprechenden Verfahrens zur Verfügung zu stellen. Des Weiteren ist es Aufgabe der Erfindung, ein korrespondierendes Fahrzeug mit einer entsprechenden Steuervorrichtung zu ermöglichen.

Die voranstehende Aufgabe wird gelöst durch ein Verfahren zum Bestimmen einer fahrbaren Trajektorie innerhalb eines befahrbaren Suchraumes für ein Fahrzeug, insbesondere ein terrestrisches Fahrzeug, mit den Merkmalen des unabhängigen Verfahrensanspruches. Ferner wird die voranstehende Aufgabe gelöst durch ein korrespondierendes Computerprogrammprodukt zum Durchführen eines entsprechenden Verfahrens mit den Merkmalen des unabhängigen Produktanspruches. Weiterhin wird die voranstehende Aufgabe gelöst durch eine korrespondierende Steuervorrichtung zum Durchführen eines entsprechenden Verfahrens mit den Merkmalen des unabhängigen Vorrichtungsanspruches. Des Weiteren wird die voranstehende Aufgabe gelöst durch ein korrespondierendes Fahrzeug mit einer entsprechenden Steuervorrichtung mit den Merkmalen des nebengeordneten Vorrichtungsanspruches. Merkmale, die zu unterschiedlichen Aspekten der Erfindung offenbart werden, können miteinander kombiniert werden, ohne den Rahmen der vorliegenden Offenbarung zu verlassen.

Die Erfindung stellt ein Verfahren zum Bestimmen einer fahrbaren Trajektorie (bspw. zwischen einem bestimmten Startpunkt und einem gewünschten Endpunkt) innerhalb eines befahrbaren (bspw. für eine kollisionsfreie Fahrt verfügbaren) Suchraumes für ein Fahrzeug bereit, insbesondere ein terrestrisches Fahrzeug, vorzugsweise ein assistiert fahrendes, ein hochassistiert fahrendes oder ein autonom fahrendes Fahrzeug, bevorzugt während eines mobilen Betriebs des Fahrzeuges.

Das Verfahren kann folgende Aktionen/Verfahrensschritte aufweisen:
(erste Stufe)
   - Bestimmen einer ersten (insbesondere geringen) Anzahl an befahrbaren Bahnabschnitten (umfassend bspw. maximal 3 oder 5 Bahnabschnitte) an Koordinatenpunkten innerhalb des befahrbaren Suchraumes
(die erste Anzahl an befahrbaren Bahnabschnitten kann bspw. in Abhängigkeit von einem gewünschten Vereinfachungsgrad bestimmt werden),
   - Ermitteln, insbesondere grobes Ermitteln, einer bevorzugten Trajektorie (bspw. mithilfe eines Optimierungsverfahrens, z. B. mithilfe einer ersten Kostenfunktion für verschiedene fahrbare Trajektorien entlang unterschiedlicher befahrbarer Bahnabschnitte) innerhalb des befahrbaren Suchraumes,
(zweite Stufe)
   - Bestimmen einer zweiten Anzahl an befahrbaren Bahnabschnitten, die größer ist als die erste Anzahl (umfassend bspw. Minimum 7 oder 9 Bahnabschnitte), an Koordinatenpunkten innerhalb eines angepassten Suchraumes
(die zweite Anzahl an befahrbaren Bahnabschnitten kann bspw. in Abhängigkeit von einem gewünschten Genauigkeitsgrad bestimmt werden),
wobei der angepasste Suchraum entlang der bevorzugten Trajektorie gebildet wird (bspw. sodass die dortigen Koordinatenpunkte in einem bestimmten Abstand zur bevorzugten Trajektorie liegen, um zu ermöglichen, dass der angepasste Suchraum wesentlich kleiner ist als der zur Verfügung stehende befahrbare Suchraum),
   - Ermitteln, insbesondere feines Ermitteln, einer angepassten Trajektorie (bspw. mithilfe eines Optimierungsverfahrens, z. B. mithilfe einer zweiten Kostenfunktion für verschiedene fahrbare Trajektorien entlang unterschiedlicher befahrbarer Bahnabschnitte) innerhalb des angepassten Suchraumes, wobei die Trajektorie auf einer Straße oder auf einem Weg abgebildet wird.

Mithilfe des Verfahrens kann ein rekursives Bestimmen einer fahrbaren Trajektorie bereitgestellt werden. Zunächst kann in einem verfügbaren befahrbaren Suchraum eine grobe Planung durchgeführt werden, bei welcher eine geringe Anzahl an möglichen Bahnabschnitten an Koordinatenpunkten gewählt wird. Somit kann schnell, wenn auch relativ ungenau, eine bevorzugte Trajektorie gefunden werden. Weiterhin kann in einem eingegrenzten angepassten Suchraum entlang der bevorzugten Trajektorie die feine Planung durchgeführt werden, bei welcher eine hohe Anzahl an möglichen Bahnabschnitten an Koordinatenpunkten gewählt wird. Dadurch, dass der angepasste Suchraum eingegrenzt ist und der angepasste Suchraum somit eine reduzierte Anzahl an Koordinatenpunkten umfasst, kann die feine Planung relativ schnell durchgeführt werden. Insgesamt betrachtet kann somit ein verbessertes Verfahren zum Bestimmen einer fahrbaren Trajektorie innerhalb eines befahrbaren Suchraumes bereitgestellt werden, welches schnell durchführbar ist, welches die benötigten Rechenressourcen auf eine vorteilhafte Weise reduziert, und welches ein sichere Trajektorienplanung, insbesondere während eines mobilen Betriebs eines Fahrzeuges, ermöglicht.

Grundsätzlich ist es aber auch denkbar, dass das Verfahren mehrere rekursive Stufen aufweisen kann, um die bevorzugte Trajektorie nach und nach bzw. Stufe um Stufe zu verfeinern.

Ferner kann vorgesehen sein, dass ein Abstand zwischen den Koordinatenpunkten innerhalb des befahrbaren Suchraumes und/oder innerhalb des angepassten Suchraumes unterhalb von 5 Metern, insbesondere unterhalb von 2 Metern, vorzugsweise unterhalb von 1 Meter, liegt. Auf diese Weise können sogar komplexe Szenarien bewältigt werden, die bspw. mehrere Abbiegemöglichkeiten, Verzweigungen, Hindernisse o. Ä. in dem befahrbaren Suchraum aufweisen, z. B. beim Navigieren in einem Parkhaus, und eine fahrbare Trajektorie kann sicher ermittelt werden.

Vorteilhafterweise kann der Abstand zwischen den Koordinatenpunkten in Abhängigkeit von einer Fahrzeuggeschwindigkeit bestimmt werden. Dabei ist es denkbar, dass, je geringer die Geschwindigkeit des Fahrzeuges ist, desto kleiner der Abstand zwischen den Koordinatenpunkten bestimmt werden kann. Auf diese Weise können unterschiedliche Szenarien im mobilen Betrieb des Fahrzeuges auf eine vorteilhafte Weise berücksichtigt werden. Je komplexer das Szenario ist, desto kleiner kann die Geschwindigkeit des Fahrzeuges eingestellt werden. Dabei kann automatisch der Abstand zwischen den Koordinatenpunkten in Abhängigkeit von der reduzierten Fahrzeuggeschwindigkeit reduziert werden. Auf diese Weise kann die Sicherheit beim Bestimmen einer fahrbaren Trajektorie für ein Fahrzeug erhöht werden.

Die Koordinatenpunkte können bspw. als lokale Punkte in einem Koordinatenraum, insbesondere einem Fahrzeugkoordinatenraum, als lokale Punkte auf einer Straße, einer Bahn, in einem Parkhaus und/oder auf einem Parkplatz o. Ä. bestimmt werden. Auf diese Weise können mithilfe des Verfahrens Fahrtrajektorien im Nahebereich, wie z. B. in einem Parkhaus oder auf einem Parkplatz, ermittelt werden.

Grundsätzlich ist es aber auch denkbar, dass die Koordinatenpunkte als globale Punkte in einem geografischen Koordinatenraum (sog. GPS-Koordinaten) bestimmt werden können. Auf diese Weise können mithilfe des Verfahrens Fahrtrajektorien in einem Fernbereich, umfassend z. B. Straßengabelungen und/oder Autobahnkreuze, ermittelt werden.

Beispielsweise können die befahrbaren Bahnabschnitte als gerade Linien und/oder Kurven mit unterschiedlicher Krümmung, insbesondere Klothoiden, abgebildet werden. Auf diese Weise kann die Genauigkeit beim Bestimmen von Fahrtrajektorien erhöht werden.

Die befahrbaren Bahnabschnitte können bspw. eine Länge unterhalb von 7 Metern, insbesondere von 5 Metern, vorzugsweise unterhalb von 2 Metern, aufweisen. Somit können sogar komplexe Szenarien, z. B. beim Navigieren in einem Parkhaus, bewältigt werden.

Vorteilhafterweise kann die Länge der befahrbaren Bahnabschnitte in Abhängigkeit von einer Fahrzeuggeschwindigkeit bestimmt werden. Dabei ist es denkbar, dass, je geringer die Geschwindigkeit des Fahrzeuges ist, desto kleiner die Länge der befahrbaren Bahnabschnitte bestimmt werden kann. Auf diese Weise können unterschiedliche Szenarien im mobilen Betrieb des Fahrzeuges flexibel berücksichtigt werden. Je komplexer das Szenario ist, desto kleiner kann die Geschwindigkeit des Fahrzeuges eingestellt werden. Dabei kann automatisch die Länge der befahrbaren Bahnabschnitte in Abhängigkeit von der reduzierten Fahrzeuggeschwindigkeit reduziert werden. Auf diese Weise kann die Sicherheit beim Bestimmen einer fahrbaren Trajektorie für ein Fahrzeug erhöht werden.

Die befahrbaren Bahnabschnitte werden als Trajektorien auf einer Straße oder auf einem Weg abgebildet.

Auf diese Weise können mithilfe des Verfahrens längere Navigationsabschnitte in einem Fernbereich, umfassend z. B. Straßengabelungen und/oder Autobahnkreuze, bewältigt werden.

Einfachheitshalber kann die erste Kostenfunktion gleich zu der zweiten Kostenfunktion gewählt werden. Auf diese Weise können die erforderlichen Speicherressourcen zum Durchführen des Verfahrens reduziert werden.

Vorteilhafterweise können/kann die erste Kostenfunktion und/oder die zweite Kostenfunktion Krümmungen, Krümmungsänderungen und/oder Abstände zu Hindernissen an den befahrbaren Bahnabschnitten berücksichtigen. Auf diese Weise kann eine verbesserte Trajektorie zum Navigieren des Fahrzeuges bestimmt werden.

Wie oben bereits erwähnt, kann der befahrbare Suchraum als ein verfügbarer Fahrraum abgebildet werden, welcher insbesondere frei von Hindernissen ausgebildet ist und/oder eine kollisionsfreie Fahrt ermöglicht.

Wie oben bereits erwähnt, kann der angepasste Suchraum Koordinatenpunkte mit mehreren befahrbaren Bahnabschnitten entlang der bevorzugten Trajektorie umfassen, die insbesondere in einem bestimmten Abstand zur bevorzugten Trajektorie liegen, vorzugsweise unterhalb einer 2-fachen, bevorzugt einer 1,5-fachen oder besonders bevorzugt einer 1-fachen Fahrzeugbreite. Auf diese Weise kann der angepasste Suchraum gezielt eingegrenzt werden, um eine effektive Feinplanung zu ermöglichen.

Die Erfindung stellt bereit ein Computerprogrammprodukt bereit, umfassend Befehle, die bei der Ausführung des Computerprogramms durch einen Computer diesen veranlassen, ein Verfahren durchzuführen, welches wie oben beschrieben ablaufen kann. Dabei können die gleichen Vorteile erreicht werden, die oben beschrieben wurden.

Die Erfindung stellt eine Steuervorrichtung zum Bestimmen einer fahrbaren Trajektorie innerhalb eines befahrbaren Suchraumes für ein Fahrzeug, insbesondere ein terrestrisches Fahrzeug, bereit, aufweisend eine Speichervorrichtung und eine Rechenvorrichtung, wobei in der Speichervorrichtung ein Code hinterlegt ist und wobei beim Ausführen des Codes durch die Rechenvorrichtung ein Verfahren durchgeführt wird, welches wie oben beschrieben ablaufen kann. Dabei können die gleichen Vorteile erreicht werden, die oben beschrieben wurden.

Die Erfindung stellt ein Fahrzeug bereit, insbesondere ein terrestrisches Fahrzeug, vorzugsweise ein assistiert fahrendes, ein hochassistiert fahrendes oder ein autonom fahrendes Fahrzeug, aufweisend eine entsprechende Steuervorrichtung. Dabei können die gleichen Vorteile erreicht werden, die oben im Zusammenhang mit dem Verfahren beschrieben wurden.

Weitere Vorteile, Merkmale und Einzelheiten der Erfindung ergeben sich aus der nachfolgenden Beschreibung, in der unter Bezugnahme auf die Zeichnungen mehrere Ausführungsbeispiele der Erfindung im Einzelnen beschrieben sind. Die Figuren zeigen:
- Fig. 1: ein Beispiel für eine Anzahl an Koordinatenpunkten mit mehreren Bahnabschnitten an jedem Koordinatenpunkt,
- Fig. 2: ein Beispiel für ein vereinfachtes Suchverfahren mit einer reduzierten Anzahl an Bahnabschnitten, und
- Fig. 3: ein Beispiel für ein vorgeschlagenes rekursives Suchverfahren zum Bestimmen einer fahrbaren Trajektorie innerhalb eines befahrbaren Suchraumes.

Die Figuren dienen zum Erklären eines Verfahrens, welches zum Bestimmen einer fahrbaren Trajektorie entwickelt wurde, die bspw. von einem bestimmten Startpunkt P1 zu einem gewünschten Endpunkt P2 führen kann. Die Trajektorie wird innerhalb eines befahrbaren Suchraumes R1 bestimmt, welcher bspw. als ein verfügbarer Raum bestimmt werden kann, der hindernisfrei ausgeführt ist und/oder eine kollisionsfreie Fahrt ermöglichen kann. Das Verfahren kann für ein Fahrzeug 100, insbesondere ein terrestrisches Fahrzeug, vorzugsweise ein assistiert fahrendes, ein hochassistiert fahrendes oder ein autonom fahrendes Fahrzeug, bevorzugt für ein mobiles Betreiben des Fahrzeuges vorgesehen werden.

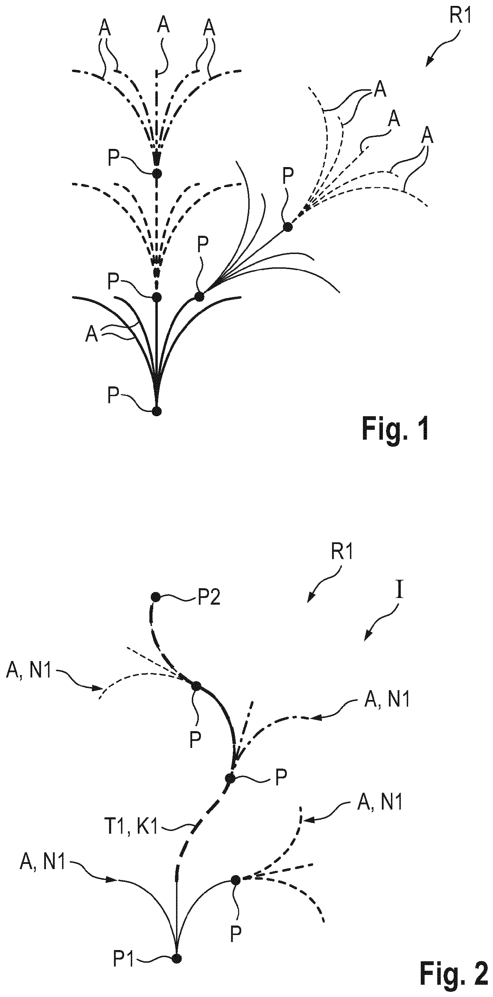

Das Verfahren kann eine erste Stufe I aufweisen, wie es die Fig. 2 andeutet:
- Bestimmen einer ersten, bspw. relativ geringen, Anzahl N1 an befahrbaren Bahnabschnitten A, z. B. in Höhe von 3 Bahnabschnitten, an Koordinatenpunkten P innerhalb des befahrbaren Suchraumes R1,
- Ermitteln, insbesondere grobes Ermitteln, einer bevorzugten Trajektorie T1, bspw. mithilfe eines Optimierungsverfahrens, z. B. mithilfe einer ersten Kostenfunktion K1 für verschiedene fahrbare Trajektorien entlang unterschiedlicher befahrbarer Bahnabschnitte A innerhalb des befahrbaren Suchraumes R1.

Die bevorzugte Trajektorie T1 ist das Ergebnis einer groben Planung und ist in der Fig. 2 als eine gestrichelte Linie dargestellt.

Dabei ist es denkbar, dass die erste Anzahl N1 an befahrbaren Bahnabschnitten A in Abhängigkeit von einem gewünschten Vereinfachungsgrad bestimmt werden kann. Der Vereinfachungsgrad kann vorteilhafterweise in Abhängigkeit von einer verfügbaren Rechenkapazität gewählt werden. Dabei ist es bspw. denkbar, dass, je geringer die verfügbare Rechenkapazität ist, desto kleiner die erste Anzahl N1 an befahrbaren Bahnabschnitten A gewählt werden kann.

Dabei ist es denkbar, dass der befahrbare Suchraum R1 als ein verfügbarer Fahrraum abgebildet werden kann, welcher insbesondere frei von Hindernissen ausgebildet ist und/oder eine kollisionsfreie Fahrt ermöglicht.

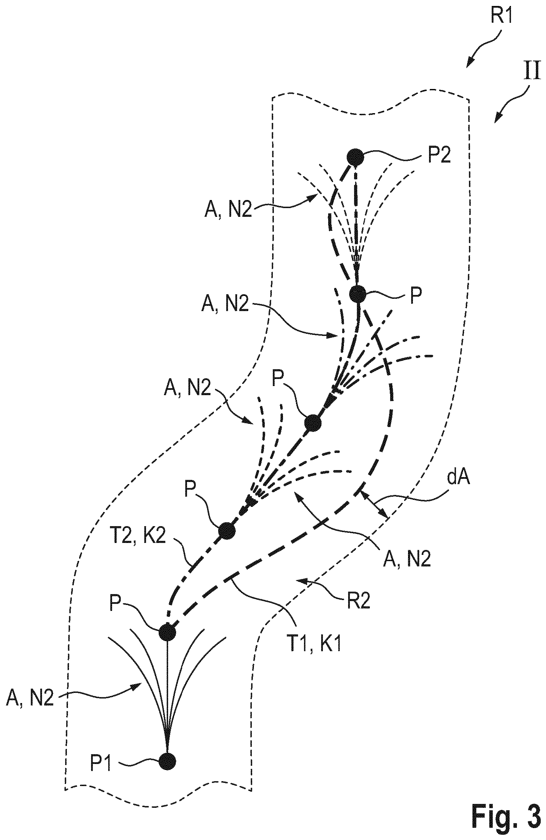

Das Verfahren kann eine zweite Stufe II aufweisen, wie es die Fig. 3 andeutet:
- Bestimmen einer zweiten Anzahl N2 an befahrbaren Bahnabschnitten A, die größer ist als die erste Anzahl N1, z. B. in Höhe von Minimum 7 oder 9 Bahnabschnitten, an Koordinatenpunkten P innerhalb eines angepassten Suchraumes R2,
   wobei der angepasste Suchraum R2 entlang der bevorzugten Trajektorie T1 gebildet wird, bspw. sodass die dortigen Koordinatenpunkte in einem bestimmten Abstand zur bevorzugten Trajektorie T1 liegen, um zu ermöglichen, dass der angepasste Suchraum R2 wesentlich kleiner ist als der zur Verfügung stehende befahrbare Suchraum,
- Ermitteln, insbesondere feines Ermitteln, einer angepassten Trajektorie T2, bspw. mithilfe eines Optimierungsverfahrens, z. B. mithilfe einer zweiten Kostenfunktion K2 für verschiedene fahrbare Trajektorien entlang unterschiedlicher befahrbarer Bahnabschnitte A innerhalb des angepassten Suchraumes R2.

Die angepasste Trajektorie T2 ist das Ergebnis einer feinen Planung und ist in der Fig. 3 als eine strichpunktierte Linie dargestellt.

Dabei ist es denkbar, dass die zweite Anzahl N2 an befahrbaren Bahnabschnitten A bspw. in Abhängigkeit von einem gewünschten Verfeinerungsgrad bestimmt werden kann. Der Verfeinerungsgrad kann vorteilhafterweise in Abhängigkeit von einer gewünschten Genauigkeit gewählt werden.

Dabei ist es denkbar, dass der angepasste Suchraum R2 Koordinatenpunkte P mit mehreren befahrbaren Bahnabschnitten A entlang der bevorzugten Trajektorie T1 umfassen kann, die insbesondere in einem bestimmten Abstand dA zur bevorzugten Trajektorie T1 liegen, vorzugsweise unterhalb einer 2-fachen, bevorzugt einer 1,5-fachen oder besonders bevorzugt einer 1-fachen Fahrzeugbreite. Auf diese Weise kann der angepasste Suchraum R2 gezielt eingegrenzt werden, um eine effektive Feinplanung zu ermöglichen.

Mithilfe des Verfahrens kann ein rekursives Bestimmen einer fahrbaren Trajektorie bereitgestellt werden.

Wie es die Fig. 2 andeutet, kann zunächst in einem ganzen verfügbaren befahrbaren Suchraum R1 eine grobe Planung durchgeführt werden, bei welcher eine geringe Anzahl N1 an möglichen Bahnabschnitten A an Koordinatenpunkten P gewählt wird. Somit kann schnell, wenn auch relativ ungenau, eine bevorzugte Trajektorie T1 gefunden werden.

Wie es die Fig. 3 andeutet, kann weiterhin in einem eingegrenzten angepassten Suchraum R2 entlang der bevorzugten Trajektorie T1 die feine Planung durchgeführt werden, bei welcher eine höhere Anzahl N2 an möglichen Bahnabschnitten A an Koordinatenpunkten P gewählt wird. Dadurch, dass der angepasste Suchraum R2 eingegrenzt ist und der angepasste Suchraum R2 somit eine reduzierte Anzahl an Koordinatenpunkten P umfasst, kann die feine Planung relativ schnell durchgeführt werden.

Mithilfe der Erfindung kann somit verbessertes Verfahren zum Bestimmen einer fahrbaren Trajektorie innerhalb eines befahrbaren Suchraumes R1 bereitgestellt werden, welches schnell durchführbar ist, welches die benötigten Rechenressourcen in einem Fahrzeug 100 auf eine vorteilhafte Weise reduziert, und welches ein sichere Trajektorienplanung, insbesondere während eines mobilen Betriebs des Fahrzeuges 100, ermöglicht.

Der Abstand zwischen den Koordinatenpunkten P innerhalb des befahrbaren Suchraumes R1 und/oder innerhalb des angepassten Suchraumes R2 kann bspw. unterhalb von 5 Metern, insbesondere unterhalb von 2 Metern, vorzugsweise unterhalb von 1 Meter, liegen. Auf diese Weise können Fahrsituationen bewältigt werden, die z. B. beim Navigieren in einem Parkhaus entstehen.

Der Abstand zwischen den Koordinatenpunkten P kann zudem in Abhängigkeit von einer Fahrzeuggeschwindigkeit V bestimmt werden. Dabei ist es denkbar, dass, je geringer die Geschwindigkeit des Fahrzeuges 100 ist, desto kleiner der Abstand zwischen den Koordinatenpunkten P bestimmt werden kann. Auf diese Weise können unterschiedliche Szenarien im mobilen Betrieb des Fahrzeuges 100 entsprechend der Fahrzeuggeschwindigkeit V berücksichtigt werden. Somit kann die Sicherheit beim Bestimmen einer fahrbaren Trajektorie für ein Fahrzeug erhöht werden.

Die Koordinatenpunkte P können bspw. als lokale Punkte in einem Koordinatenraum, insbesondere einem Fahrzeugkoordinatenraum, als lokale Punkte auf einer Straße, einer Bahn, in einem Parkhaus und/oder auf einem Parkplatz o. Ä. abgebildet werden. Auf diese Weise können mithilfe des Verfahrens Fahrtrajektorien im Nahebereich, wie z. B. in einem Parkhaus oder auf einem Parkplatz, ermittelt werden.

Grundsätzlich ist es aber auch denkbar, dass die Koordinatenpunkte P als globale Punkte in einem geografischen Koordinatenraum bzw. als GPS-Koordinaten bestimmt werden können. Auf diese Weise können mithilfe des Verfahrens längere Fahrtrajektorien in einem Fernbereich, umfassend z. B. Straßengabelungen und/oder Autobahnkreuze, ermittelt werden.

Wie es die Fig. 1 - 3 andeuten, können die befahrbaren Bahnabschnitte A als gerade Linien und/oder Kurven mit unterschiedlicher Krümmung, bspw. in Form von Klothoiden, abgebildet werden.

Die befahrbaren Bahnabschnitte A können bspw. eine Länge unterhalb von 7 Metern, insbesondere von 5 Metern, vorzugsweise unterhalb von 2 Metern, aufweisen. Auf diese Weise können Fahrsituationen bewältigt werden, die z. B. beim Navigieren in einem Parkhaus entstehen.

Die Länge der befahrbaren Bahnabschnitte A kann außerdem in Abhängigkeit von einer Fahrzeuggeschwindigkeit V bestimmt werden. Dabei ist es denkbar, dass, je geringer die Geschwindigkeit des Fahrzeuges 100 ist, desto kleiner die Länge der befahrbaren Bahnabschnitte A bestimmt werden kann. Auf diese Weise können unterschiedliche Szenarien im mobilen Betrieb des Fahrzeuges 100 automatisch in Abhängigkeit von der Fahrzeuggeschwindigkeit V berücksichtigt werden. Auf diese Weise kann die Sicherheit beim Bestimmen einer fahrbaren Trajektorie für ein Fahrzeug 100 erhöht werden.

Die befahrbaren Bahnabschnitte A werden als Trajektorien auf einer Straße oder auf einem Weg abgebildet. Auf diese Weise können mithilfe des Verfahrens längere Navigationsabschnitte in einem Fernbereich, umfassend z. B. Straßengabelungen und/oder Autobahnkreuze, bewältigt werden.

Einfachheitshalber kann die erste Kostenfunktion K1 gleich zu der zweiten Kostenfunktion K2 gewählt werden. Auf diese Weise können die erforderlichen Speicherressourcen zum Durchführen des Verfahrens reduziert werden.

Des Weiteren ist es denkbar, dass die erste Kostenfunktion K1 und/oder die zweite Kostenfunktion K2 Krümmungen, Krümmungsänderungen und/oder Abstände zu Hindernissen an den befahrbaren Bahnabschnitten A berücksichtigen können/kann.

Weiterhin stellt die Erfindung ein korrespondierendes Computerprogrammprodukt und eine korrespondierende Steuervorrichtung 10 zum Durchführen des Verfahrens bereit.

Des Weiteren stellt die Erfindung ein Fahrzeug 100, insbesondere ein terrestrisches Fahrzeug, vorzugsweise ein assistiert fahrendes, ein hochassistiert fahrendes oder ein autonom fahrendes Fahrzeug, mit einer entsprechenden Steuervorrichtung 10 bereit.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

### Bezugszeichenliste

- 100: Fahrzeug
- 10: Steuervorrichtung

- A: Bahnabschnitten
- P: Koordinatenpunkt
- V: Fahrzeuggeschwindigkeit

- K1: erste Kostenfunktion
- N1: erste Anzahl
- R1: befahrbarer Suchraum
- T1: bevorzugte Trajektorie

- K2: zweite Kostenfunktion
- N2: zweite Anzahl
- R2: angepasster Suchraum
- T2: angepasste Trajektorie

- P1: Startpunkt
- P2: Endpunkt

- dA: Abstand

- I: erste Stufe
- II: zweite Stufe

## Patentansprüche

1. Computerimplementiertes Verfahren zum Bestimmen einer fahrbaren Trajektorie innerhalb eines befahrbaren Suchraumes (R1) für ein Fahrzeug (100), insbesondere ein terrestrisches Fahrzeug,
aufweisend:
- Bestimmen einer ersten Anzahl (N1) an befahrbaren Bahnabschnitten (A) an Koordinatenpunkten (P) innerhalb des befahrbaren Suchraumes (R1),
- Ermitteln, insbesondere grobes Ermitteln, einer bevorzugten Trajektorie (T1) innerhalb des befahrbaren Suchraumes (R1),
- Bestimmen einer zweiten Anzahl (N2) an befahrbaren Bahnabschnitten (A), die größer ist als die erste Anzahl (N1), an Koordinatenpunkten (P) innerhalb eines angepassten Suchraumes (R2),
wobei der angepasste Suchraum (R2) entlang der bevorzugten Trajektorie (T1) gebildet wird, und
- Ermitteln, insbesondere feines Ermitteln, einer angepassten Trajektorie (T2) innerhalb des angepassten Suchraumes (R2),
wobei die Trajektorie auf einer Straße oder auf einem Weg abgebildet wird.

2. Computerimplementiertes Verfahren nach Anspruch 1,
wobei ein Abstand zwischen den Koordinatenpunkten (P) innerhalb des befahrbaren Suchraumes (R1) und/oder innerhalb des angepassten Suchraumes (R2)
unterhalb von 5 Metern, insbesondere unterhalb von 2 Metern, vorzugsweise unterhalb von 1 Meter, liegt,
wobei insbesondere der Abstand zwischen den Koordinatenpunkten (P) in Abhängigkeit von einer Fahrzeuggeschwindigkeit (V) bestimmt wird,
und/oder wobei die Koordinatenpunkte (P) als lokale Punkte in einem Koordinatenraum, insbesondere einem Fahrzeugkoordinatenraum, als lokale Punkte auf einer Straße, einer Bahn, in einem Parkhaus und/oder auf einem Parkplatz o. Ä. bestimmt werden.

3. Computerimplementiertes Verfahren nach Anspruch 1 oder 2,
wobei die befahrbaren Bahnabschnitte (A) als gerade Linien und/oder Kurven mit unterschiedlicher Krümmung, insbesondere Klothoiden, abgebildet werden,
und/oder wobei die befahrbaren Bahnabschnitte (A) eine Länge unterhalb von 7 Metern, insbesondere von 5 Metern, vorzugsweise unterhalb von 2 Metern, aufweisen,
wobei insbesondere die Länge der befahrbaren Bahnabschnitte (A) in Abhängigkeit von einer Fahrzeuggeschwindigkeit (V) bestimmt wird.

4. Computerimplementiertes Verfahren nach einem der vorhergehenden Ansprüche,
wobei beim Ermitteln der bevorzugten Trajektorie (T1) innerhalb des befahrbaren Suchraumes (R1) eine erste Kostenfunktion (K1) benutzt wird,
und wobei beim Ermitteln der angepassten Trajektorie (T2) innerhalb des angepassten Suchraumes (R2) eine zweite Kostenfunktion (K2) benutzt wird.

5. Computerimplementiertes Verfahren nach dem vorhergehenden Anspruch,
wobei die erste Kostenfunktion (K1) gleich zu der zweiten Kostenfunktion (K2) gewählt wird,
und/oder wobei die erste Kostenfunktion (K1) und/oder die zweite Kostenfunktion (K2) Krümmungen, Krümmungsänderungen und/oder Abstände zu Hindernissen an den befahrbaren Bahnabschnitten (A) berücksichtigen.

6. Computerimplementiertes Verfahren nach einem der vorhergehenden Ansprüche, wobei der befahrbare Suchraum (R1) als ein verfügbarer Fahrraum abgebildet wird, welcher insbesondere frei von Hindernissen ausgebildet ist und/oder eine kollisionsfreie Fahrt ermöglicht.

7. Computerimplementiertes Verfahren nach einem der vorhergehenden Ansprüche,
wobei der angepasste Suchraum (R2) Koordinatenpunkte (P) mit mehreren befahrbaren Bahnabschnitten (A) entlang der bevorzugten Trajektorie (T1) umfasst,
die insbesondere in einem bestimmten Abstand (dA) zur bevorzugten Trajektorie (T1) liegen, vorzugsweise unterhalb einer 2-fachen, bevorzugt einer 1,5-fachen oder besonders bevorzugt einer 1-fachen Fahrzeugbreite.

8. Steuervorrichtung (10) zum Bestimmen einer fahrbaren Trajektorie innerhalb eines befahrbaren Suchraumes (R1) für ein Fahrzeug (100), insbesondere ein terrestrisches Fahrzeug,
aufweisend eine Speichervorrichtung und eine Rechenvorrichtung,
wobei in der Speichervorrichtung ein Code hinterlegt ist,
und wobei beim Ausführen des Codes durch die Rechenvorrichtung ein Verfahren nach einem der vorhergehenden Ansprüche durchgeführt wird.

9. Fahrzeug (100), insbesondere ein terrestrisches Fahrzeug, vorzugsweise ein assistiert fahrendes, ein hochassistiert fahrendes oder ein autonom fahrendes Fahrzeug, aufweisend eine Steuervorrichtung (10) nach dem vorhergehenden Anspruch.

## Claims

1. Computer-implemented method for determining a travelable trajectory for a vehicle (100), in particular a terrestrial vehicle, within a trafficable search space (R1),
the method comprising:
- determining a first number (N1) of trafficable route portions (A) at coordinate points (P) within the trafficable search space (R1),
- ascertaining, in particular roughly ascertaining, a preferred trajectory (T1) within the trafficable search space (R1),
- determining a second number (N2) of trafficable route portions (A), which second number is greater than the first number (N1), at coordinate points (P) within an adjusted search space (R2),
wherein the adjusted search space (R2) is formed along the preferred trajectory (T1), and
- ascertaining, in particular finely ascertaining, an adjusted trajectory (T2) within the adjusted search space (R2),
wherein the trajectory is represented on a street or on a road.

2. Computer-implemented method according to claim 1,
wherein a distance between the coordinate points (P) within the trafficable search space (R1) and/or within the adjusted search space (R2) is less than 5 meters, in particular less than 2 meters, preferably less than 1 meter,
wherein in particular the distance between the coordinate points (P) is determined on the basis of a vehicle speed (V),
and/or wherein the coordinate points (P) are determined as local points in a coordinate space, in particular a vehicle coordinate space, as local points on a street, a roadway, in a parking garage and/or on a parking lot or the like.

3. Computer-implemented method according to claim 1 or 2,
wherein the trafficable route portions (A) are represented as straight lines and/or curves having a different curvature, in particular clothoids,
and/or wherein the trafficable route portions (A) have a length of less than 7 meters, in particular of 5 meters, preferably less than 2 meters,
wherein in particular the length of the trafficable route portions (A) is determined on the basis of a vehicle speed (V).

4. Computer-implemented method according to any of the preceding claims,
wherein, when ascertaining the preferred trajectory (T1) within the trafficable search space (R1), a first cost function (K1) is used,
and wherein, when ascertaining the adjusted trajectory (T2) within the adjusted search space (R2), a second cost function (K2) is used.

5. Computer-implemented method according to the preceding claim,
wherein the first cost function (K1) is chosen to be equal to the second cost function (K2),
and/or wherein the first cost function (K1) and/or the second cost function (K2) take into account curvatures, curvature changes and/or distances to obstacles at the trafficable route portions (A).

6. Computer-implemented method according to any of the preceding claims,
wherein the trafficable search space (R1) is represented as an available traveling space which in particular is free of obstacles and/or makes collision-free travel possible.

7. Computer-implemented method according to any of the preceding claims,
wherein the adjusted search space (R2) comprises coordinate points (P) having a plurality of trafficable route portions (A) along the preferred trajectory (T1),
which coordinate points are in particular at a certain distance (dA) from the preferred trajectory (T1), preferably less than 2 times, preferably 1.5 times or particularly preferably 1 times the vehicle width.

8. Control device (10) for determining a travelable trajectory for a vehicle (100), in particular a terrestrial vehicle, within a trafficable search space (R1),
which control device has a storage device and a computing device,
wherein a code is stored in the storage device,
and wherein, when the code is executed by the computing device, a method according to any of the preceding claims is carried out.

9. Vehicle (100), in particular a terrestrial vehicle, preferably an assisted driving, a highly assisted driving or an autonomously driving vehicle, comprising a control device (10) according to the preceding claim.

## Revendications

1. Procédé mis en œuvre par ordinateur permettant de déterminer une trajectoire praticable à l'intérieur d'un espace de recherche carrossable (R1) pour un véhicule (100), en particulier un véhicule terrestre,
présentant :
- la détermination d'un premier nombre (N1) de tronçons de voie carrossables (A) à des points de coordonnées (P) situés à l'intérieur de l'espace de recherche carrossable (R1),
- l'établissement, en particulier l'établissement grossier, d'une trajectoire préférée (T1) à l'intérieur de l'espace de recherche carrossable (R1),
- la détermination d'un second nombre (N2) de tronçons de voie carrossables (A), lequel est supérieur au premier nombre (N1), à des points de coordonnées (P) situés à l'intérieur d'un espace de recherche adapté (R2), dans lequel l'espace de recherche adapté (R2) est formé le long de la trajectoire préférée (T1), et
- l'établissement, en particulier l'établissement précis, d'une trajectoire adaptée (T2)
à l'intérieur de l'espace de recherche adapté (R2),
dans lequel la trajectoire est représentée sur une route ou sur un chemin.

2. Procédé mis en œuvre par ordinateur selon la revendication 1,
dans lequel une distance entre les points de coordonnées (P) à l'intérieur de l'espace de recherche carrossable (R1) et/ou à l'intérieur de l'espace de recherche adapté (R2) est inférieure à 5 mètres, en particulier inférieure à 2 mètres, de préférence inférieure à 1 mètre,
dans lequel la distance entre les points de coordonnées (P) est en particulier déterminée en fonction d'une vitesse de véhicule (V),
et/ou dans lequel les points de coordonnées (P) sont déterminés sous forme de points locaux dans un espace de coordonnées, en particulier un espace de coordonnées de véhicule, et sous forme de points locaux sur une route, une voie, dans un parc de stationnement et/ou sur une place de stationnement, etc.

3. Procédé mis en œuvre par ordinateur selon la revendication 1 ou 2,
dans lequel les tronçons de voie carrossables (A) sont représentés sous forme de lignes droites et/ou de courbes de courbure variable, en particulier de clothoïdes,
et/ou dans lequel les tronçons de voie carrossables (A) présentent une longueur inférieure à 7 mètres, en particulier de 5 mètres, de préférence inférieure à 2 mètres,
dans lequel la longueur des tronçons de voie carrossables (A) est en particulier déterminée en fonction d'une vitesse de véhicule (V).

4. Procédé mis en œuvre par ordinateur selon l'une des revendications précédentes,
dans lequel une première fonction de coût (K1) est utilisée pour établir la trajectoire préférée (T1) à l'intérieur de l'espace de recherche carrossable (R1),
et dans lequel une seconde fonction de coût (K2) est utilisée pour établir la trajectoire adaptée (T2) à l'intérieur de l'espace de recherche adapté (R2).

5. Procédé mis en œuvre par ordinateur selon la revendication précédente,
dans lequel la première fonction de coût (K1) est choisie de manière à être égale à la seconde fonction de coût (K2),
et/ou dans lequel la première fonction de coût (K1) et/ou la seconde fonction de coût (K2) prennent en compte des courbures, des variations de courbure et/ou des distances par rapport aux obstacles sur les tronçons de voie carrossables (A).

6. Procédé mis en œuvre par ordinateur selon l'une des revendications précédentes,
dans lequel l'espace de recherche carrossable (R1) est représenté sous forme d'espace de circulation disponible, lequel est en particulier réalisé exempt d'obstacles et/ou permet une circulation sans collision.

7. Procédé mis en œuvre par ordinateur selon l'une des revendications précédentes,
dans lequel l'espace de recherche adapté (R2) comprend des points de coordonnées (P) comportant plusieurs tronçons de voie carrossables (A) le long de la trajectoire préférée (T1),
lesquels points de coordonnées se situent en particulier à une certaine distance (dA) de la trajectoire préférée (T1), de préférence à une distance inférieure à deux fois, de préférence à une fois et demie ou, de manière particulièrement préférée, à une fois la largeur de véhicule.

8. Dispositif de commande (10) permettant de déterminer une trajectoire praticable à l'intérieur d'un espace de recherche carrossable (R1) pour un véhicule (100), en particulier un véhicule terrestre,
présentant un dispositif de mémoire et un dispositif de calcul,
dans lequel un code est enregistré dans le dispositif de mémoire,
et dans lequel, lors de l'exécution du code par le dispositif de calcul, un procédé selon l'une des revendications précédentes est exécuté.

9. Véhicule (100), en particulier véhicule terrestre, de préférence véhicule à conduite assistée, à conduite hautement assistée ou à conduite autonome, présentant un dispositif de commande (10) selon la revendication précédente.
